Europäisches Patentamt

European Patent Office

Office européen des brevets

(11) Publication number: **0 520 447 A1**

# EUROPEAN PATENT APPLICATION

(21) Application number: **92110734.8**

(22) Date of filing: **25.06.92**

(51) Int. Cl.5: **C08J 7/02**, C08G 63/90, //C08L67/02

(30) Priority: **27.06.91 KR 1080491**

(43) Date of publication of application:
**30.12.92 Bulletin 92/53**

(84) Designated Contracting States:
**DE FR GB IT**

(71) Applicant: **CHEIL SYNTHETICS INC.**
**1, Chungsan-Dong**
**Kyungsan-city, Kyungsang buk-Do(KR)**

(72) Inventor: **Kim, Kwang Tae**
**Hanbo Meedo Apartment 101-707, 452,**
**Daechi-Dong**
**Kangnam-ku, Seoul(KR)**
Inventor: **Kim, Tae Han c/o Cheil Synthetics**
**Inc.**
**1, Chungsan-Dong, Kyungsan-City**
**Kyungsangbuk-Do(KR)**
Inventor: **Lee, Moon Bok**
**22, Geunhwa-Dong**
**Choonchun-City, Kangwon-do(KR)**

(74) Representative: **Hering, Hartmut, Dipl.-Ing. et al**
**Patentanwälte Berendt, Leyh & Hering**
**Innere-Wiener-Strasse 20**
**W-8000 München 80(DE)**

(54) Method for preparing low oligomer polyester films.

(57) A method for preparing a low-oligomer polyester film useful as an insulation material. The method comprises extracting oligomers from the polyester sheet using an organic solvent at a temperature less than the boiling point of the solvent, drying the polyester sheet after the extraction using hot air and then stretching the polyester sheet. In the extraction step, the conditions are calculated from the equations

$$bp\text{-}40 \leq T \leq bp\text{-}15, \text{ and } \log t = (T/\mu)K$$

wherein $4 \leq K \leq 10$, T is the temperature of the organic solvent, $\mu$ is the thickness of the polyester sheet, t is the travelling time of the polyester sheet in the solvent vessel. In the drying step, the conditions are calculated from the equations

$$0.6 \leq -\log K \leq 1,486, \text{ and } 1.40 \leq \log R \leq 2.5$$

wherein $K = T'/\mu$, $R = T'/t'$, T' is the drying temperature, $\mu$ is the thickness of the polyester sheet and t' is the travelling time of the polyester sheet during the drying step.

EP 0 520 447 A1

## FIG. 1

## BACKGROUND OF THE INVENTION

Field of the Invention

The present invention relates in general to a method for preparing polyester films, and more particularly to a method for preparing low-oligomer polyester films, especially polyethylene terephthalate films or ethylene terephthalate based polyester films, having excellent mechanical and electrical properties.

Description of the Prior Art

Conventionally, polyester films are used for various industrial fields by virtue of their excellent mechanical and electrical properties such as high tensile strength and high breakdown voltage, thus they are steadily increased in the marketing quantity. In addition, the polyester films are classified in accordance with their properties into various types and also improve their functions for practical uses.

Recently, it is required to provide low-oligomer polyester films which can be preferably used as an insulation material for an electric motor of a refrigerator hermetic compressor since such compressor with improved functions and in a compacted form is increasingly required.

However as known to those skilled in the art, known polyester films generally contain about 1.3 to 1.7 % by weight of cyclic trimer based oligomers, which cause a problem in using the polyester films as the insulation material in the hermetic compressor motor of refrigerator such that the oligomers contained in the polyester films are prone, by the refrigerator oil or refrigerant such as freon gas, to be discharged into the coolant of the refrigerator. These discharged oligomers chemically react with the coolant so as to be polymerized, then they are deposited on an equipment of the refrigerator such as the evaporator, the filter or the driving shaft of the motor, thereby causing the equipments of the refrigerator to be out of order.

To solve this problem, it is required to provide a low-oligomer polyester film which has a reduced extractable amount of oligomers preferably not more than 0.7 % by weight and most preferably not more than 0.5 % by weight.

With reference to published theses or patents, it will be known that there were proposed several methods using solvents for extracting the oligomers from the polyester films. In extraction of the oligomers from the polyester films using the solvents, it is required to use a solvent which can make the oligomer content in the polyester films after the oligomer extraction as small as possible , simultaneously resulting in no or little change in the chemical and physical properties of the polyester films after the extraction in comparison with the original polyester sheets before the oligomer extraction.

As disclosed in Japanese Patent Publication Nos. Sho. 43-23,348, Sho. 44-2,120 and Sho. 54-62,277, dimethylformaldehyde and benzyl alcohol disclosed in the first and second patents and xylene disclosed in the third patent may be used as the solvents for extraction of the oligomers from the polyester sheets. However, these solvents have disadvantages in that they do not satisfy the aforementioned requirements or in that other problems occur in executing the extraction process.

On the other hand, it is considered that dioxane and chloroform are more suitable than the other solvents for extraction of the oligomers from the polyester sheets in consideration of their properties and other conditions. However, it is known that they have the following disadvantages in practical use.

That is, to reduce the amount of residual oligomers in the polyester sheets after the oligomer extraction as much as possible it is required to dip the polyester sheets in the solvent vessel in consideration of the functional relation between the dipping time and the solvent temperature. If the polyester sheet is dipped in the solvent vessel for a substantially longer than a predetermined time during the extraction step, there occur several problems such as possibility of breaking and uneven stretching of the polyester sheet during the continued steps, that is, the stretching and the heat treating steps for the polyester sheet. On the other hand, the solvent temperature may be increased to about the room temperature or the boiling point of the solvent as disclosed in Japanese Patent Publication No. Sho. 54-62,277. However, the extraction step performed under the above temperatures has a problem of a bad influence on human body and causes an environmental pollution.

## SUMMARY OF THE INVENTION

It is, therefore, an object of the present invention to provide a method for preparation of a low-oligomer polyester film in which the above problems can be overcome and which prepares a low-oligomer polyester film containing few oligomers and also having improved properties such as a high breakdown voltage and an improved double refraction rate.

An organic solvent, dioxane or chloroform, is preferably employed to the polyester sheet before the stretching step of the method for preparation of the low-oligomer polyester film so that the product polyester film is provided with desired properties, such as required mechanical and electrical properties,and with a degree of opacity within a desired range, which make it useful for the insulation material. According to the employment of the above solvents, the product low-oligomer polyester film has excellent mechanical and electrical properties, and is easily distinguished by the worker in machining the insulation material for the refrigerator compressor motor.

In the method of the present invention, the solvent, dioxane or chloroform, is used for the extraction of oligomers from the polyester sheet after casting, thereby preparing a low-oligomer polyester sheet which contains oligomers of not more than 0.5 % by weight and having improved electrical properties, especially a high breakdown voltage. After the extraction of the oligomers, the polyester sheet is sequentially subjected to appropriate hot air drying, stretching and heat treating steps, thereby improving the mechanical and electrical properties thereof.

In other words, the present method for preparation of the low-oligomer polyester film is characterized in that the polyester sheet before a biaxial stretching is dipped in the solvent vessel containing dioxane or chloroform at a temperature not more than the boiling point of the solvent prior to the hot air drying step so that the oligomers are extracted from the polyester sheet. The polyester sheet after the extraction step is biaxially stretched and heat-treated so as to prepare a desired low-oligomer polyester film preferably useful for the insulation material for a refrigerator compressor motor.

In comparison with the original polyester sheet just after the casting, the product low-oligomer polyester film prepared by the method of this invention has an about 1.35-1.5 times improved breakdown voltage and a double refraction rate ($n_Z$)of not more than 1.4860.

## BRIEF DESCRIPTION OF THE DRAWING

The above and other objects, features and other advantages of the present invention will be more clearly understood from the following detailed description taken in conjunction with the accompanying drawing, in which:

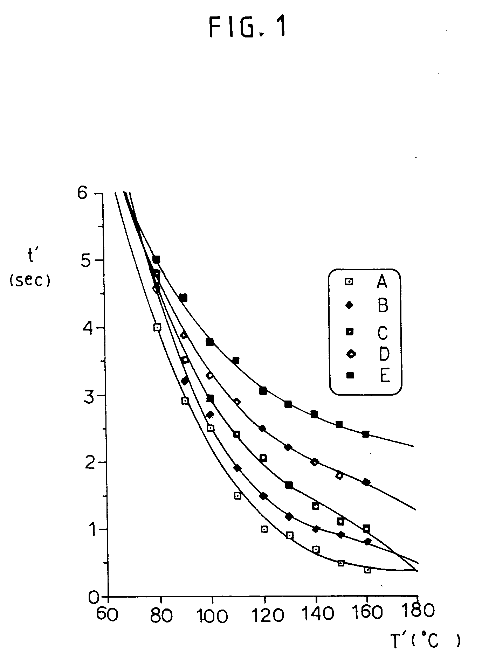

Fig. 1 is a graph diagram showing the relations between the thicknesses $\mu$ of the polyester sheets, the drying temperatures T' and the drying times t'.

## DETAILED DESCRIPTION OF THE PREFERRED EMBODIMENT

In the present method for preparation of a low-oligomer polyester film, a polyester sheet before being biaxially stretched is dipped in a solvent vessel containing an organic solvent, dioxane or chloroform, at a temperature not more than the boiling point of the solvent in consideration of a functional relation between the thickness of polyester sheet and the dipping time, that is, the travelling time of the polyester sheet in the solvent vessel. Here, the organic solvent for extraction of the oligomers may be selected from only dioxane, only chloroform or a mixture of other organic solvents each containing dioxane or chloroform as an essential ingredient.

To maintain the polyester sheet in the solvent inside the solvent vessel for a predetermined time, the polyester sheet just after being discharged from a polymerization die is travelled in the solvent vessel under a condition that the sheet is supported by a driving shaft. It is thus very important to select the materials for clips, a tension roll and a driving roll, each provided to the driving shaft, since they have to have a good solvent resistance against the solvent, that is, dioxane, chloroform or a mixture of other organic solvents containing dioxane or chloroform.

On the other hand, the polyester sheet travelling in the solvent vessel is an isotropic and non-orientated sheet so that the extraction effect of the oligomers is exhibited in a short time. However, the polyester sheet has no or little mechanical property, thus there may occur the problem of partially uneven stretching of the sheet during the continued stretching step, often most impossibility of stretching.

The extraction of the oligomers may be executed at a temperature not more than the boiling point of the solvent under a constant pressure or it may be executed under increasing pressure. In addition, the dipping time may be changed as demanded.

The conditions under which the extraction step is executed in order to prepare the low-oligomer polyester films useful for their own uses are, therefore, calculated from the equation

$$bp\text{-}40 \leqq T \leqq bp\text{-}15 \text{ and}$$
$$\log t = (T/\mu)K$$

4

wherein $4 \leq K \leq 10$, T is the temperature of the solvent, $\mu$ is the thickness of the polyester sheet, t is the travelling time of the polyester sheet in the solvent vessel during the extraction step.

In this extraction step, the content of moisture of the solvent and/or of the polyester sheet is very important because the sheet is easily hydrolyzed by moisture during the dipping of the sheet in the solvent vessel, thereby causing the I.V. (inherent viscosity) of the polyester film to be reduced and/or causing the surface condition of the product polyester film to be deteriorated.

It is, therefore, favorable to reduce the content of moisture of the solvent as much as possible. In addition, during the extraction of the oligomers, the oligomers are steadily extracted from the polyester sheet into the solvent such that the oligomer content of the solvent is increased as the extraction time goes by. The extraction speed of the oligomers is thus reduced so that the extraction amount of the oligomers per unit time is reduced, thus the extraction effect is deteriorated. To solve this problem, the solvent after use for a predetermined extraction time is preferably distilled so as to remove the oligomers therefrom to be purified for reuse.

On the other hand, the polyester sheet after the above extraction step is treated by an appropriate hot air dryer prior to the stretching step. The dryer provides a hot air circulation of such appropriate intensity that the air circulation volatilizes the residual solvent from the polyester sheet, removes the residual oligomers from the polyester sheet surface, provides the polyester sheet with a desired stretching stability and efficiently prevents the working environment from being polluted.

According to the aforementioned steps, that is, the oligomer extraction and hot air drying steps, the low-oligomer polyester sheet is obtained. However as described above, this polyester sheet has a problem in that it may be broken or partially unevenly stretched .Often it is impossible for the sheet to be stretched in the continued stretching step.

Due to this problem, the polyester sheet has bad mechanical properties such as low tensile strength and low draw rate (elongation) and bad thermal properties such as deteriorated thermal shrinkage. Especially, such polyester sheet has bad electrical properties such as reduced breakdown voltage property so that the product polyester film obtained from the polyester sheet can not be preferably used for the insulation film, particularly for the refrigerator compressor motor.

Therefore in accordance with the present invention, the polyester sheet after the extraction step is appropriately tensioned during being dried by the hot air dryer. Simultaneously with having no problem of occurrence of uneven stretching and breaking during the continued stretching step, the polyester sheet obtained from such drying step has an an about 1.35-1.5 times improved brekdown voltage property and a good double refraction rate ($n_Z$)of not more than 1.4860 in comparison with the original polyester sheet before the extraction.

Here, the polyester sheet after the extraction may be preferably dried by several types of drying methods, for example, drying under a reduced pressure, hot air circulation drying under a reduced pressure, hot air blow drying under increasing pressure, infrared ray drying and hot roll contact drying, so as to obtain the above advantages. Of the above-mentioned drying methods, non-contact and reflux type drying methods are more suitable to the present polyester sheet than other types such as the contact type method in consideration of the working conditions, for example, the sheet type polyester, etc., of this invention.

The conditions in drying the polyester sheet are preferably calculated in consideration of a predetermined functional relation between the thickness of the sheet and the employed drying type.

Fig. 1 is a graph diagram showing the relations between the thicknesses $\mu$ of the polyester sheets, the drying temperatures T and the drying times t.

In this diagram, the x-axis represents the drying temperatures ($^\circ$C), while the y-axis represents the drying times (second). In addition, the curves A to E show sheets of thicknesses of 612.5 $\mu$, 918.75 $\mu$, 1.225 $\mu$, 1,837.5 $\mu$ and 3,062.5 $\mu$, respectively.

The drying step for the polyester sheet is preferably executed at a temperature not more than 160$^\circ$C, preferably at a temperature within a temperature range suitable to the stretching of the sheet. If the drying temperature exceeds the above temperature range, there may occur a crystallization of the sheet, thereby causing the sheet to be badly influenced. Thus, it is prone to uneven stretching. Often the sheet breaks during the continued stretching step.

In case of being dried at a temperature of about glass transition point, for example, about 80 $^\circ$C, of the polyester sheet, the sheet having been dipped in the solvent vessel has not sufficient heat hysteresis so that it is easily broken during the stretching step. Furthermore, the polyester sheet in case of such low temperature has to be dipped in the solvent vessel for a relatively longer time to obtain the same oligomer extraction effect as that of the extraction at the higher temperature, thereby causing the Sheet to be badly influenced as described above.

In the present method, the drying is, therefore, preferably performed at a temperature not less than 100 °C. In accordance, the relations between the drying temperatures T, the drying times t and the thicknesses $\mu$ of the polyester sheet must satisfy the following equations (1) and (2) at the same time

$$0.6 \leq - \log K \leq 1,486 \qquad (1)$$

wherein $K = T'/\mu$.

$$1.40 \leq \log R \leq 2.5 \qquad (2)$$

wherein $R = T'/t'$.

In the equation (1), if the value of -log K is calculated to be more than 1.486, representing that the polyester sheet after the oligomer extraction is dried at a temperature less than a predetermined reference temperature, the desired drying effect of the sheet can not be achieved, thus there occurs the problems such as breaking and uneven stretching of the sheet during the continued stretching step. On the contrary, if the value of -log K is calculated to be less than 0.6, aforementioned crystallization of the polyester sheet occurs.

In accordance with the equation (2), if the polyester sheet is not dried for a predetermined reference drying time, the sheet has not enough heat hysteresis required to the desired stretching, and this causes occurrence of uneven stretching and breaking of the sheet in the stretching step and also results in a bad influence to the surface condition, for example, the surface consistency, of the product polyester film. On the contrary, in case of drying the polyester sheet for a longer time exceeding the predetermined reference drying time, the sheet is badly affected such that a desired molecular orientation thereof can not be achieved in the continued stretching step and, furthermore, desired properties such as thermal shrinkage stability does not appear.

It is possible to maintain the thickness of the product polyester film within a range of about 50 - 300 $\mu$m, generally known thickness range of the polyester film useful for the insulation film, together with satisfying the above equations (1) and (2).

The product polyester film prepared by the above-mentioned method has excellent mechanical properties such as high tensile strength and elongation, and excellent electrical properties such as high breakdown voltage so that it is favorable to be used for the insulation material for compressor motors of refrigerators.

The preparation of the low-oligomer polyester film of this invention is illustrated by the following examples and comparative examples.

EXAMPLES 1 to 5

Five isotropic polyester sheets, each having a thickness of 612.5 $\mu$, 918.75 $\mu$, 1,225 $\mu$, 1,837.5 $\mu$ or 3,062.5 $\mu$ as represented in Fig. 1, were individually dipped in the solvent vessel containing the organic solvent at a temperature of 50 °C for different dipping times so as to extract the oligomers therefrom. Thereafter, the polyester sheets are dried by a hot air dryer at a temperature of 100 °C for different drying times, then biaxially stretched at a drawing rate of 3.5 x 3.5, respectively. The results, such as oligomer extraction amounts and breakdown voltages, of the examples are shown in Table 1.

COMPARATIVE EXAMPLES 1 to 3

Three isotropic polyester sheets of a thickness of 918.75 $\mu$ were individually dipped in the same solvent vessel as that of the above examples at a temperature of 50 °C for different dipping times so as to extract the oligomers therefrom. The polyester sheets are, thereafter, dried by the hot air dryer at a temperature of 100 °C for different drying times, then biaxially stretched at the drawing rate of 3.5 x 3.5, respectively. The results are shown in Table 1.

TABLE 1

| | | Examples | | | | | Comparative Examples | | |
|---|---|---|---|---|---|---|---|---|---|
| | | 1 | 2 | 3 | 4 | 5 | 1 | 2 | 3 |
| Sheet Thickness($\mu$) | | 612.5 | 918.75 | 1225 | 1837.5 | 3062.5 | 918.75 | 918.75 | 918.75 |
| Inherent Viscosity($\eta$) | | 0.605 | 0.615 | 0.610 | 0.612 | 0.613 | 0.615 | 0.615 | 0.615 |
| Drawing Rate | | 3.5 x | 3.5 x | 3.5 x | 3.5 x | 3.5 x | 3.5 x | 3.5 x | 3.5 x |
| | | 3.5 | 3.5 | 3.5 | 3.5 | 3.5 | 3.5 | 3.5 | 3.5 |
| Extraction Conditions | Tem.($^\circ$C) | 50 | 50 | 50 | 50 | 50 | 50 | 50 | 50 |
| | Time(sec) | 3 | 3.5 | 4 | 4.5 | 5 | 3.5 | 3.5 | 3.5 |
| Drying Conditions | Tem.($^\circ$C) | 100 | 100 | 100 | 100 | 100 | 100 | 120 | 140 |
| | Time(sec) | 2.5 | 2.7 | 2.95 | 3.3 | 3.8 | 3 | 0.5 | 2.5 |
| Property 1[*1)] | Amount[*3)] | 1.56 | 1.78 | 1.55 | 1.77 | 1.70 | 1.78 | 1.78 | 1.78 |
| Property 2[*2)] | Amount[*3)] | 0.5 | 0.45 | 0.45 | 0.55 | 0.50 | 0.42 | 1.5 | 0.4 |
| | Voltage[*4)] | 10.6 | 13 | 18.2 | 20.5 | 25.4 | - | 9.62 | - |
| Utility | | ○ | ○ | ○ | ○ | ○ | X | ○ | X |

1) Property of original polyester sheet
2) Property of product polyester film
3) Oligomer extraction amount (% by weight)
4) Breakdown Voltage (KV/mm)

## EVALUATION TEST

1. Oligomer content analysis:

a. The product polyester films of the examples and the comparative examples and also the originals polyester sheets are ground using a grinder into minute powder samples, respectively.
b. 5 g of each sample is taken in each beaker together with 25 ml of chloroform.
c. In order to extract the oligomers, each sample in the beaker is subjected to an oligomer extraction using a SOXHLET extractor in an incubator of 95 $^\circ$C for 10 hours. Thereafter, the concentration of the extract is measured using an UV spectrometer.

2. Breakdown voltages:

Each of the product polyester films of the examples and the comparative examples is applied with an increasing voltage at a velocity of 500 V/S so as to measure the breakdown voltage (KV/mm) when the film loosesits insulation property. (referred to ASTM D149)

3. Double refraction rate :

The double refraction rate of each product polyester film is measured using a polarizing microscope provided with a Vereck compensator at a temperature of 25 $^\circ$C and a relative humidity of 65 %. The measured values are multiplied by 10 in order to be shown in Table 1, respectively.

**Claims**

1.  A method for preparing a low-oligomer polyester film from a polyester sheet comprising:
    extracting oligomers from said polyester sheet using an organic solvent at a temperature less than or equal to the boiling point of said solvent, drying said polyester sheet after the extraction using hot air at a predetermined temperature and then stretching said polyester sheet.

2.  The method according to claim 1, wherein said organic solvent is dioxane or chloroform.

3.  The method according to claim 1, wherein said oligomers are extracted from said polyester sheet at a time between a discharging step of the polyester sheet from a casting die and a longitudinal stretching step of the polyester sheet and under the extraction conditions satisfying the equations

    bp-40 ≤ T ≤ bp-15, and
    log t = (T/μ)K

    wherein $4 \leq K \leq 10$, T is the temperature of the organic solvent, $\mu$ is the thickness of the polyester sheet, t is the travelling time of the polyester sheet in the solvent during the extraction of the oligomers.

4.  The method according to claim 1 or 3, wherein said polyester sheet after the extraction of the oligomers is dried before a longitudinal stretching step of the polyester sheet under the drying conditions satisfying the equations

    0.6 ≤ - log K ≤ 1,486, and
    1.40 ≤ log R ≤ 2.5

    wherein $K = T'/\mu$, $R = T'/t'$, T' is the drying temperature, $\mu$ is the thickness of the polyester sheet and t' is the travelling time of the polyester sheet during the drying step.

# FIG. 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 091 669 (TEIJN LIMITED)<br>* claims 1,2,20,21 *<br>* page 4, line 32 - line 37 *<br>* page 17, line 24 - line 29 *<br>* page 18, line 29 - page 19, line 31 *<br>* page 22, line 27 - line 29 *<br>* examples 1,2,4,9-11 *<br>* examples 13,20-24 *<br>--- | 1-3 | C08J7/02<br>C08G63/90<br>//C08L67:02 |
| A | DATABASE WPI<br>Derwent Publications Ltd., London, GB;<br>AN 7951664B[28]<br>& JP-A-54 068 880 (DIA FOIL KK) 2 June 1979<br>* abstract *<br>--- | 1 | |
| A | DATABASE WPI<br>Derwent Publications Ltd., London, GB;<br>AN 7751407Y[29]<br>& JP-A-52 069 602 (TEIJN KK) 9 June 1977<br>* abstract *<br><br>----- | 1 | **TECHNICAL FIELDS SEARCHED (Int. Cl.5 )**<br><br>C08J<br>C08G |

The present search report has been drawn up for all claims

| Place of search | Date of completion of the search | Examiner |
|---|---|---|
| THE HAGUE | 09 OCTOBER 1992 | NIAOUNAKIS M. |

EPO FORM 1503 03.82 (P0401)